# EUROPEAN PATENT APPLICATION

(11) **EP 3 297 354 A1**
(43) Date of publication of application: **21.03.2018**
(21) Application number: 16792770.6
(22) Date of filing: 13.05.2016
(51) Int. Cl.: H04W 72/04, H04W 16/14, H04W 24/10, H04W 48/16

(54) **USER TERMINAL AND WIRELESS COMMUNICATION METHOD**

(30) Priority: 14.05.2015 JP 2015099335
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP)
(74) Representative: Hoffmann Eitle
(86) International application number: PCT/JP2016/064236
(87) International publication number: WO 2016/182046

(57) **Abstract**

The present invention is designed to implement efficient RRM measurements in LAA. A user terminal has a control section that controls the transmission and receipt of signals in a first frequency carrier where LBT (Listen Before Talk) is configured, and a transmitting/receiving section, and the control section exerts control so that, in a DMTC (Discovery Measurement Timing Configuration) period, a downlink control channel detection operation is not performed in the first frequency carrier, and only an operation for receiving a discovery reference signal for RRM (Radio Resource Management) measurement is performed.

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). The specifications of LTE-advanced have already been drafted for the purpose of achieving further broadbandization and higher speeds beyond LTE, and, in addition, for example, successor systems of LTE -- referred to as, for example, "FRA" (future radio access) -- are under study.

In LTE of Rel. 8 to 12, the specifications have been drafted assuming exclusive operations in frequency bands that are licensed to operators -- that is, licensed bands. For licensed bands, for example, 800 MHz, 2 GHz and/or 1.7 GHz have been in use.

In LTE of Rel. 13 and later versions, operation in frequency bands where license is not required -- that is, unlicensed bands -- is also a target of study. For unlicensed band, for example, 2.4 GHz, which is the same as in Wi-Fi, or the 5 GHz band and/or the like may be used. Although carrier aggregation (LAA: license-assisted access) between licensed bands and unlicensed bands is placed under study in Rel. 13 LTE, there is a possibility that, in the future, dual connectivity and unlicensed-band stand-alone will becomes targets of study as well.

In unlicensed bands, interference control functionality is likely to be necessary in order to allow co-presence with other operators' LTE, Wi-Fi, or different systems. In Wi-Fi, the function called "LBT" (Listen Before Talk) or "CCA" (Clear Channel Assessment) is used as an interference control function within the same frequency. In Japan and Europe, the LBT function is stipulated as mandatory in systems that are run in the 5 GHz unlicensed band, such as Wi-Fi.

### Citation List

### Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2"

### Summary of Invention

### Technical Problem

Now, in order to implement RRM (Radio Resource Management) measurements in radio communication systems (LAA) that run LTE in unlicensed bands, a study is in progress to transmit discovery reference signals (DRSs) within the DMTC (Discovery Measurement Timing Configuration) period. In cases like this, the user terminal operations and the assumptions within and outside the DMTC period, which is provided for efficient implementation of RRM measurements, need to be made clear.

The present invention has been made in view of the above, and it is therefore an object of the present invention to provide a user terminal and a radio communication method that can efficiently implement RRM measurements in LAA.

### Solution to Problem

The user terminal of the present invention has a control section that controls the transmission and receipt of signals in a first frequency carrier where LBT (Listen Before Talk) is configured; and a transmitting/receiving section, and, in this user terminal, the control section exerts control so that, in a DMTC (Discovery Measurement Timing Configuration) period, a downlink control channel detection operation is not performed in the first frequency carrier, and only an operation for receiving a discovery reference signal for RRM (Radio Resource Management) measurement is performed.

### Advantageous Effects of Invention

According to the present invention, RRM measurements in LAA can be implemented efficiently.

### Brief Description of Drawings

FIG. 1 is a diagram to explain DRS transmission methods;
FIG. 2 is a diagram to explain a DRS transmission method;
FIG. 3 is a diagram to explain a DRS transmission method;
FIG. 4 is a diagram to explain a DRS transmission method according to the present embodiment;
FIGs. 5 provide diagrams to explain DRS transmission candidate locations and examples of DRS designs;
FIG. 6 is a diagram to explain a DRS transmission method according to the present embodiment;
FIG. 7 is a diagram to illustrate an example of a schematic structure of a radio communication system according to the present embodiment;
FIG. 8 is a diagram to illustrate an example of an overall structure of a radio base station according to the present embodiment;
FIG. 9 is a diagram to illustrate an example of a functional structure of a radio base station according to the present embodiment;
FIG. 10 is a diagram to illustrate an example of an overall structure of a user terminal according to the present embodiment; and
FIG. 11 is a diagram to illustrate an example of a functional structure of a user terminal according to the present embodiment.

### Description of Embodiments

Now, an embodiment of the present invention will be described in detail below with reference to the accompanying drawings. Although the present embodiment will be described assuming that a frequency carrier in which LBT is not configured is a licensed band and a frequency carrier in which LBT is configured is an unlicensed band, this is by no means limiting. That is, the present embodiment is applicable to any frequency carrier in which LBT is configured, regardless of whether this is a licensed band or an unlicensed band.

In radio communication systems (LAA) that run LTE in unlicensed bands, it is sometimes the case that LBT operation is obligatory. For example, in Japan and Europe, LBT operation is required before transmission is started in an unlicensed band. Here, if the received signal intensity during the LBT period is higher than a predetermined threshold, the channel is judged to be in the busy state (LBT_{busy}). If the received signal intensity during the LBT period is lower than the predetermined threshold, the channel is judged to be in the idle state (LBT_{idle}).

Also, there are roughly two types of LBT mechanisms -- namely, LBE (Load-Based Equipment) and FBE (Frame-Based Equipment). With LBE, initial CCA is executed, and transmission is started if LBT_{idle} is yielded, or the ECCA (Extended CCA) procedure is executed if LBT_{busy} is yielded. FBE executes carrier sensing in fixed timings and in a fixed cycle, and starts transmission if LBT_{idle} is yielded, or waits until the next carrier sensing timing if LBT_{busy} is yielded.

LAA-LTE presumes a primary cell (PCell) or a primary secondary cell (PSCell) in a licensed band and secondary cells (SCells) in unlicensed bands. To configure or reconfigure SCells in a user terminal in LAA, the user terminal has to detect SCells that are present in the surroundings by means of RRM (Radio Resource Management) measurements, measure their received quality, and then send a report to the network. Signals to allow RRM measurements in LAA are under study based on the discovery reference signal (DRS) that is stipulated in Rel. 12. The DRS is also under study, based on the premise that transmission is carried out based on the result of LBT.

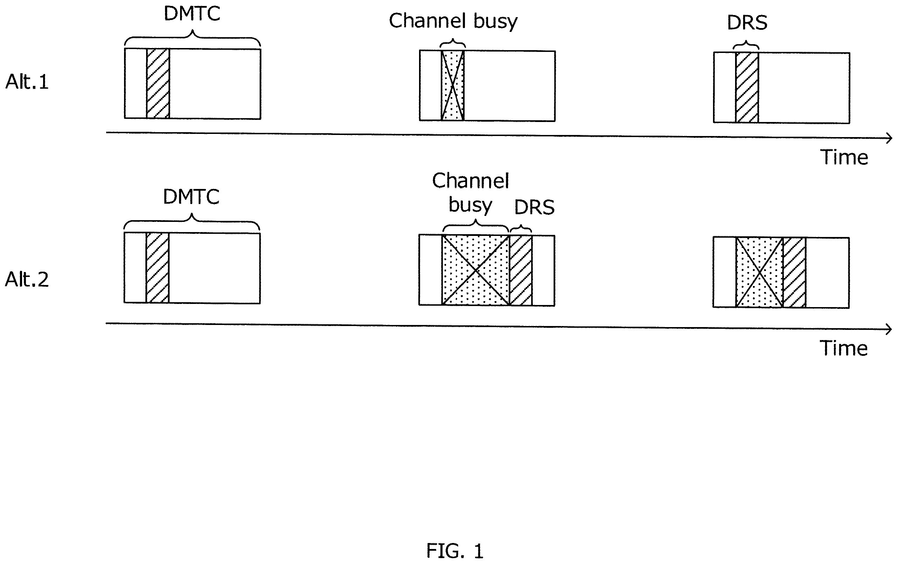

As for the method of transmitting DRSs, there are two candidates, which are illustrated in FIG. 1 as "Alt. 1" and "Alt. 2." With Alt. 1, each cell carries out DRS transmission in a DMTC (Discovery Measurement Timing Configuration) cycle in, as with the Rel. 12 DRS, so that each cell has one fixed DRS transmission location within a DMTC cycle. Consequently, if the result of LBT indicates that the channel is in the busy state and a cell does not succeed in making transmission in its fixed timing, that cell cannot transmit the DRS until the next DMTC cycle.

With Alt. 2, each cell does not necessarily carry out DRS transmission in a fixed DMTC cycle, and the DRS transmission location within a DMTC cycle is variable. Consequently, when, for example, the result of LBT indicates that the channel is in the busy state and the transmission in the first candidate location does not succeed, there is still a possibility that the DRS can be transmitted in another candidate location within the same DMTC cycle. In this case, the assumptions which a user terminal makes regarding each cell's DRS transmission timing are different than in Rel. 12 and Alt. 1.

When DRS transmission is carried out based in particular on LBT that incorporates random backoff like Wi-Fi -- that is, based on the LBE mechanismthe DRS transmission timing does not match between cells, and therefore the number of cells that can transmit the DRS within a DMTC period becomes limited. Likewise, within an operator, transmission from a given eNB blocks the other eNBs from making DRS transmission, and therefore the number of DRSs that can be transmitted within a DMTC period becomes lower. Nevertheless, there is still a possibility that simultaneous transmission of DRSs may become possible if, for example, the random backoff counter is synchronized between eNBs.

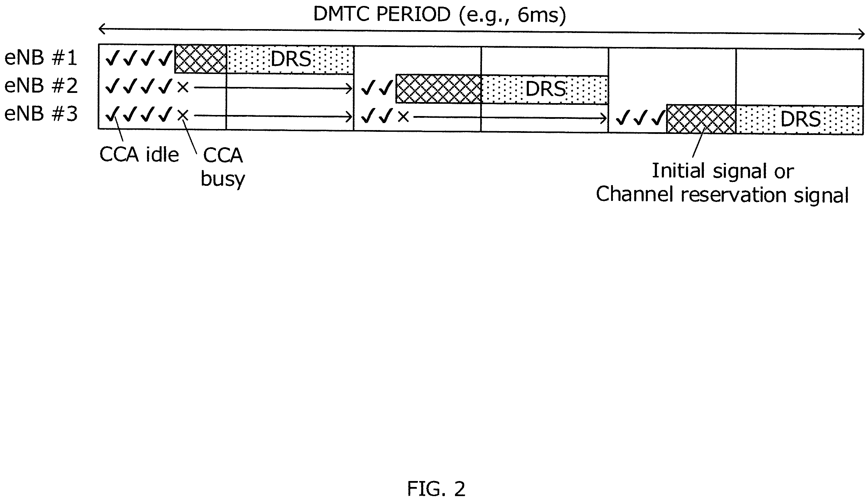

Furthermore, if the resource mapping for the Rel. 12 DRS is to be applied to the DRS resource mapping (RE (Resource Element) mapping) in LAA, in order to start DRS transmission from subframe boundaries, once a channel enters the idle state, the signal for reserving the channel needs to be transmitted until a subframe boundary is reached (see FIG. 2). Transmitting signals like this only leads to producing overhead and interference. However, if DRS transmission can be started as soon as a channel enters the idle state, without transmitting the channel reservation signal, then the DRS resource mapping needs to be changed in accordance with the subframe configuration and other needs arise, and, consequently, the detection operation in user terminals becomes complex.

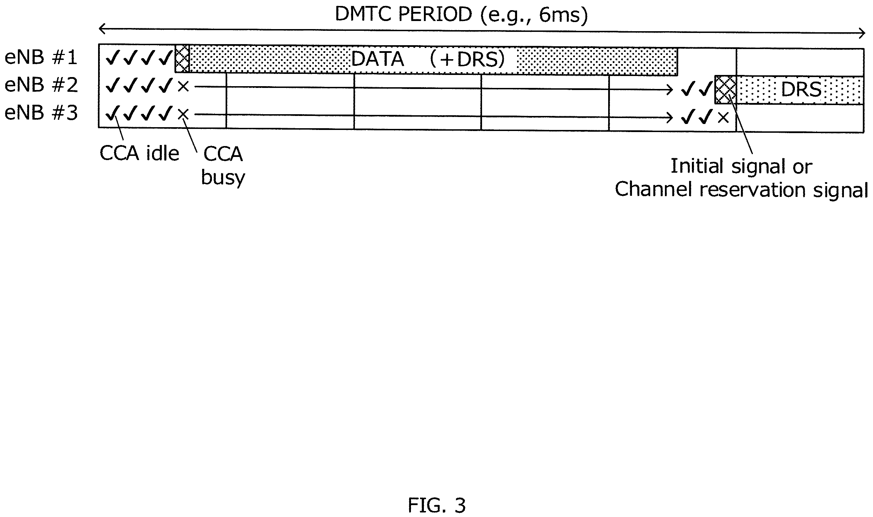

In Rel. 12, the DMTC period is fixed to 6 [ms], and the DRS length can be configured to 1 [ms] at a minimum and to 5 [ms] at a maximum. Consequently, including the time of LBT, the number of cells that can transmit DRSs within a DMTC period of 6 [ms] is less than six. If data burst transmission is made from part of the cells or other systems in the DMTC period, the time (the number of cells) in which DRSs can be transmitted within a DMTC period becomes even less (see FIG. 3). As illustrated in FIG. 3, data burst transmission by a given cell blocks DRS transmission in other nearby cells, and therefore the number of DRSs that can be transmitted (transmittable locations) decreases.

If, in order to improve the number of DRSs that can be transmitted in a DMTC period, an attempt is made to coordinate the DRS transmission timing between cells at all times and transmit DRSs simultaneously, the synchronization signals (PSS/SSS: Primary Synchronization Signal/Secondary Synchronization Signal) in the DRS keep colliding between cells, and this may have an impact on the reliability of physical cell ID (PCID) detection by user terminals. Also, regarding the PSS/SSS in the DRS, if their transmission is limited to specific subframes (for example, to the subframes of subframe numbers #0 and #5) as heretofore, the DRS transmission timings within a DMTC period are very limited.

In this way, for the DRS transmission and RRM measurements for LAA, it is still not clear what user terminal operations and assumptions are adequate within and outside the DMTC period.

Given this, the present inventors have found out the configuration of the present invention by focusing on the following points.

Given that LAA cells are always used as SCells, basically, a user terminal does not have to conduct RRM measurements with respect to cells that are not capable of carrier aggregation with the connecting PCell. Cells that are capable of carrier aggregation with the connecting PCell are always time-synchronized with the connecting PCell. Consequently, by coordinating the DRS transmission timings of a plurality of LAA cells and enabling simultaneous transmission, it is possible to increase the number of cells that can transmit DRSs within the DMTC period, and, furthermore, partly simplify the DRS detection process in user terminals.

Also, if data transmission other than DRS transmission is made during the DMTC period, this blocks DRS transmission from nearby cells, so that, by making arrangements to ensure that such data transmission does not take place during the DMTC period, it is possible to simplify the user terminal operation during the DMTC period.

Furthermore, in order to raise the DRS success rate in each DMTC cycle, DRS configurations and DRS transmission methods to provide increased DRS-transmittable locations and LBT opportunities are introduced. The DMTC cycle may be long as long as the DRS transmission success rate increases, and the efficiency does not decrease much even if the DMTC period cannot be used for data transmission.

Thus, according to the present invention, it is possible to increase the DRS transmission success rate in the DMTC period by making simultaneous DRS transmission between cells, and by not transmitting data, in the DMTC period. Also, by not transmitting data during the DMTC period, it is possible to skip the user terminal operations during the DMTC period such as the blind detection of downlink control information (DCI). By increasing the DRS transmission success rate in the DMTC period, it is possible to make the DMTC cycle long, and improve the spectral efficiency. Furthermore, it is possible to reduce the impact DRS transmission has on other systems.

According to an embodiment of the present invention, the network can configure the DMTC cycle and offset of each unlicensed frequency in connecting user terminals that can execute LAA. The network can configure additional DMTC periods. If the network does not configure a particular DMTC cycle or offset, a user terminal can assume that the DMTC period 6 [ms], in accordance with Rel. 12.

For example, by shortening or extending the DMTC period depending on the density of stations deployed and the level of interference against other systems, it is possible to implement adequate overhead, and improve the DRS transmission success rate in each DMTC period.

A user terminal may assume that, during the DMTC period, the PDCCH/EPDCCH (Physical Downlink Control Channel/Enhanced PDCCH) is not transmitted in unlicensed frequencies. That is, during the DMTC period, a user terminal does not perform PDCCH/EPDCCH detection operations in unlicensed frequencies.

A user terminal may also assume that DRSs are transmitted in unlicensed frequencies during the DMTC period. That is, a user terminal performs DRS receiving operations in unlicensed frequencies during the DMTC period. The DRS may be any of the Rel. 12 DRS or part the reference signals thereof, the Rel. 12 DRS or part of the reference signals thereof and additional reference signals or system information data, and an RRM measurement signal of a new signal configuration having a length of 1 [ms] or less, or a combination of some of these.

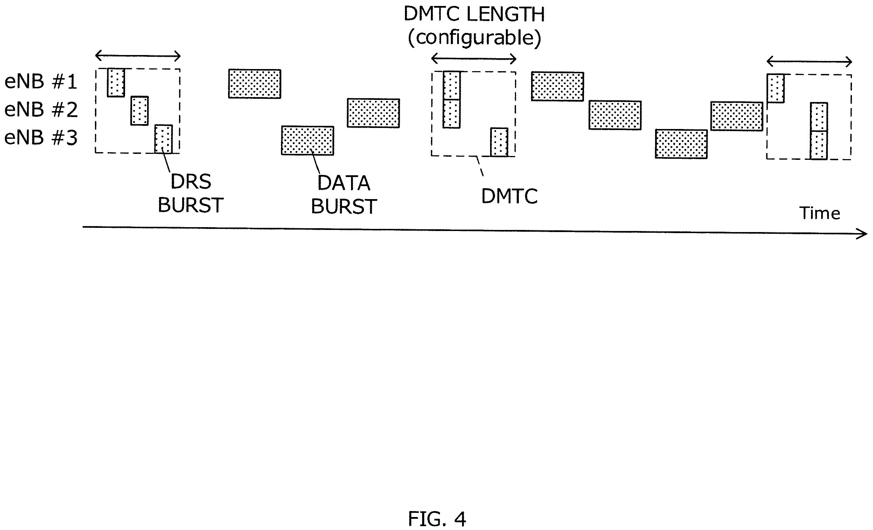

In the example illustrated in FIG. 4, a user terminal presumes DRS transmission in the DMTC period, and does not presume data transmission ((E)PDCCH). A plurality of DRS transmission candidate locations are provided in a DMTC period. The user terminal may assume that the timing of CCA is coordinated between synchronized cells and DRSs are transmitted simultaneously (see the second and third DMTC periods in FIG. 4).

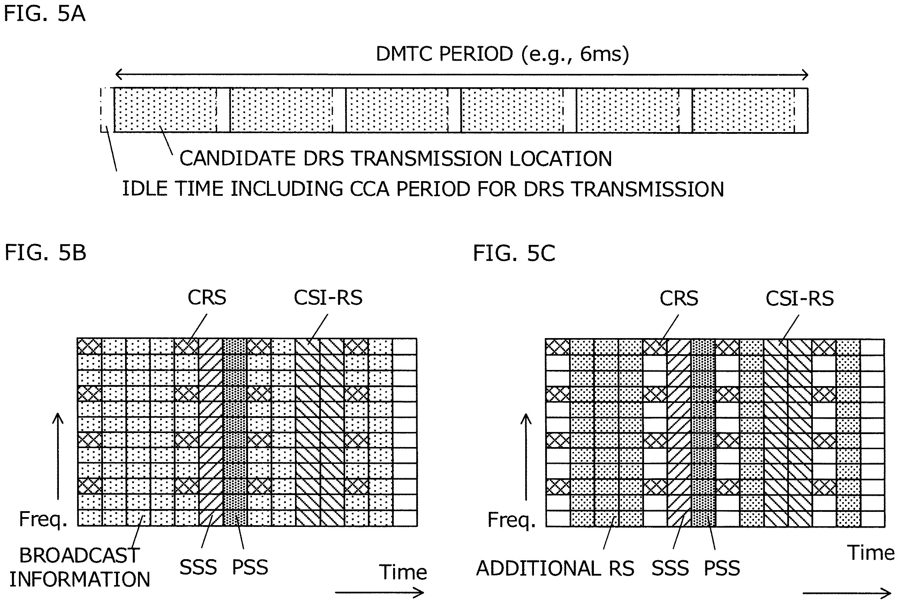

As illustrated in FIG. 5A, to transmit a DRS is in a DMTC period, it is possible to execute LBT based on the FBE mechanism and then transmit the DRS in one of a number of candidate locations. Each subframe includes an idle (non-transmission) time, in which a CCA period for DRS transmission is included. Any location in each subframe can be a DRS transmission candidate location, except for the idle time.

FIG. 5B and FIG. 5C illustrate examples of DRS designs. The DRS illustrated in FIG. 5B is formed with the Rel. 12 DRS and broadcast information, which is multiplexed on unoccupied symbols. The DRS illustrated in FIG. 5C is formed with the Rel. 12 DRS and additional reference signals, which are multiplexed on unoccupied symbols.

A user terminal may presume a plurality of timings where the above DRS may be transmitted. The user terminal's assumption needs not be limited to specific subframes (for example, the subframes of subframe numbers #0 and #5) in the DMTC period, and the user terminal might as well assume that PSSs/SSSs are present in other subframes, too, and perform the detection operation accordingly.

The user terminal may also assume that DRSs are transmitted synchronously from multiple cells. The user terminal may use the timing of a PSS/SSS that is detected, to detect cells other than the cell corresponding to the physical cell ID of this PSS/SSS. Consequently, even when the PSSs/SSSs in multiple cells' DRSs collide between cells, it is still possible to conduct RRM measurements with respect to cells from which simultaneous transmission is made, at a detected timing.

The network may report the list of the physical cell IDs of LAA cells that are capable of carrier aggregation with the connecting PCell, to the user terminal, as a cell list. At a PSS/SSS timing detected, the user terminal can try cell detection with respect to all the physical cell IDs reported. By this means, it is possible to reduce the load of the user terminal when the user terminal carries out RRM measurements for candidate cell IDs at every PSS/SSS timing detected.

When the user terminal reports the physical cell ID, the received level (RSRP: Reference Signal Received Power) and the received quality (RSRQ: Reference Signal Received Quality) of a cell that has been detected and measured, the user terminal may also report in which timing (subframe) in the DMTC period the cells was detected and measured. The network compares the report of the results against the transmission timing on the network end, and, by this means, can judge on a detection error or an error warning.

The user terminal may carry out blind detection for signals from the serving LAA SCell in periods outside the DMTC period, and check whether or not downlink transmission is in progress in the serving LAA SCell. The target signals of blind detection may be any of the CRS (Cell-specific Reference Signal), the DMRS (Demodulation Reference Signal), the PDCCH, the EPDCCH, new reference signals or new L1 control signals, may be part of these signals, or may be a combination of a number of these signals.

The user terminal may as well not presume PBCH (Physical Broadcast Channel) transmission from the serving LAA SCell in periods outside the DMTC period. That is, the user terminal does not perform the operation of demodulating the PBCH from the serving LAA SCell in periods outside the DMTC period. In this case, the user terminal can assume that the PDSCH (Physical Downlink Shared Channel) is multiplexed in OFDM symbols #0 to #3 in slot #1 of subframe number #0, as in other subframe slots.

If downlink transmission is carried out from the serving LAA SCell in a specific subframe number in a period outside the DMTC period, the user terminal may assume that the DRS is multiplexed. In this case, the user terminal may assume that the PSS/SSS and the CSI-RS (Channel State Information Reference Signal) included in the DRS are transmitted in this subframe, in addition to the CRS, and applies rate matching to the PDSCH. When reporting the RSRP/RSRQ measured in this subframe, the user terminal may also report the measured timing (subframe).

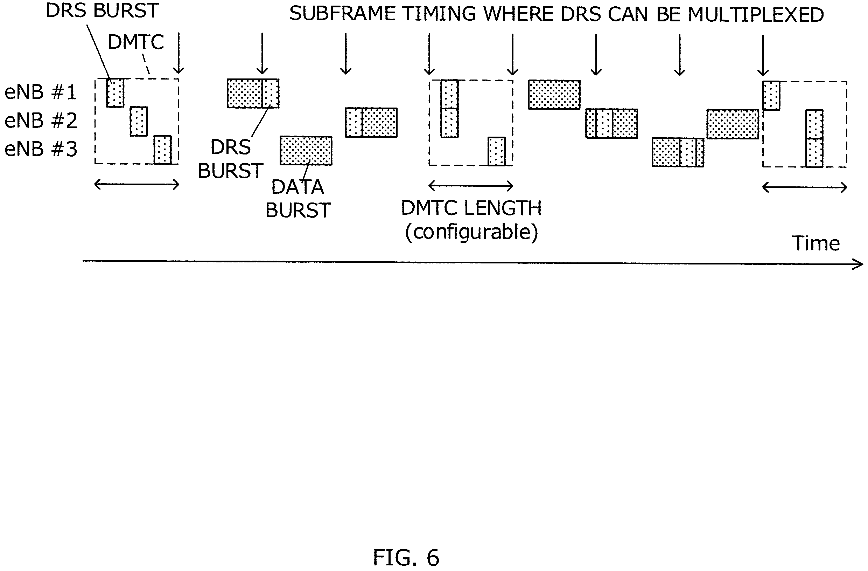

FIG. 6 is a diagram to illustrate examples of DRS transmission outside the DMTC period. As illustrated in FIG. 6, the network can multiplex and transmit DRSs on data. The user terminal may limit the subframes where a DRS can be multiplexed, in order to reduce the load of looking for DRSs outside the DMTC period. The subframe timings where a DRS can be multiplexed may be reported to the user terminals via RRC (Radio Resource Control), or may be set forth in the specification.

By this means, it is possible to have DRS transmission opportunities and measurement opportunities even outside the DMTC period. Unlike in the DMTC period, it is not necessary to start looking for PSSs/SSSs from the beginning, so that a user terminal's load can be reduced.

According to the above configuration, it is possible to reduce the overhead of DRS transmission in unlicensed bands, and, furthermore, reduce a user terminal's load for DRS detection, and implement efficient RRM measurements.

### (Structure of Radio Communication System)

Now, the structure of the radio communication system according to the present embodiment will be described below. In this radio communication system, a radio communication method to use the above-described DRS transmission and RRM measurements is employed.

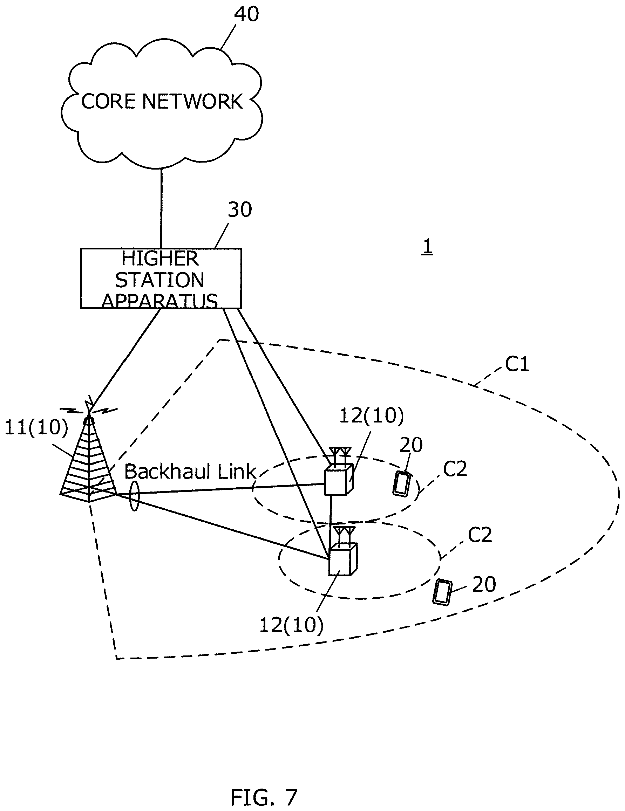

FIG. 7 is schematic structure diagram to illustrate an example of a radio communication system according to the present embodiment. This radio communication system can adopt one or both of carrier aggregation (CA) and dual connectivity (DC) to group a plurality of fundamental frequency blocks (component carriers) into one, where the LTE system bandwidth constitutes one unit. Also, this radio communication system provides a radio base station that can use unlicensed bands.

As illustrated in FIG. 7, a radio communication system 1 is comprised of a plurality of radio base stations 10 (11 and 12), and a plurality of user terminals 20 that are present within cells formed by each radio base station 10 and that are configured to be capable of communicating with each radio base station 10. The radio base stations 10 are each connected with a higher station apparatus 30, and are connected to a core network 40 via the higher station apparatus 30.

In FIG. 7, the radio base station 11 is, for example, a macro base station having a relatively wide coverage, and forms a macro cell C1. The radio base stations 12 are, for example, small base stations having local coverages, and form small cells C2. Note that the number of radio base stations 11 and 12 is not limited to that illustrated in FIG. 7.

For example, a mode may be possible in which the macro cell C1 is used in a licensed band and the small cells C2 are used in unlicensed bands. Also, a mode may be also possible in which part of the small cells C2 is used in a licensed band and the rest of the small cells C2 are used in unlicensed bands. The radio base stations 11 and 12 are connected with each other via an inter-base station interface (for example, optical fiber, the X2 interface, etc.).

The user terminals 20 can connect with both the radio base station 11 and the radio base stations 12. The user terminals 20 may use the macro cell C1 and the small cells C2, which use different frequencies, at the same time, by way of carrier aggregation or dual connectivity. For example, it is possible to transmit assist information (for example, the downlink signal configuration) related to a radio base station 12 that uses an unlicensed band, from the radio base station 11 that uses a licensed band, to the user terminals 20. Also, a structure may be employed here in which, when carrier aggregation is used between a licensed band and an unlicensed band, one radio base station (for example, the radio base station 11) controls the scheduling of licensed band cells and unlicensed band cells.

The user terminals 20 may be structured to connect with radio base stations 12, without connecting with the radio base station 11. For example, a radio base station 12 to use an unlicensed band may be structured to connect with a user terminal 20 in stand-alone. In this case, the radio base station 12 controls the scheduling of unlicensed band cells.

The higher station apparatus 30 may be, for example, an access gateway apparatus, a radio network controller (RNC), a mobility management entity (MME) and so on, but is by no means limited to these.

In the radio communication system 1, a downlink shared channel (PDSCH: Physical Downlink Shared CHannel), which is used by each user terminal 20 on a shared basis, a downlink control channel (PDCCH (Physical Downlink Control CHannel), EPDCCH (Enhanced Physical Downlink Control CHannel), etc.), a broadcast channel (PBCH) and so on are used as downlink channels. User data, higher layer control information and predetermined SIBs (System Information Blocks) are communicated in the PDSCH. Downlink control information (DCI) is communicated using the PDCCH and/or the EPDCCH.

Also, in the radio communication system 1, an uplink shared channel (PUSCH: Physical Uplink Shared Channel), which is used by each user terminal 20 on a shared basis, and an uplink control channel (PUCCH: Physical Uplink Control Channel) are used as uplink channels. User data and higher layer control information are communicated by the PUSCH.

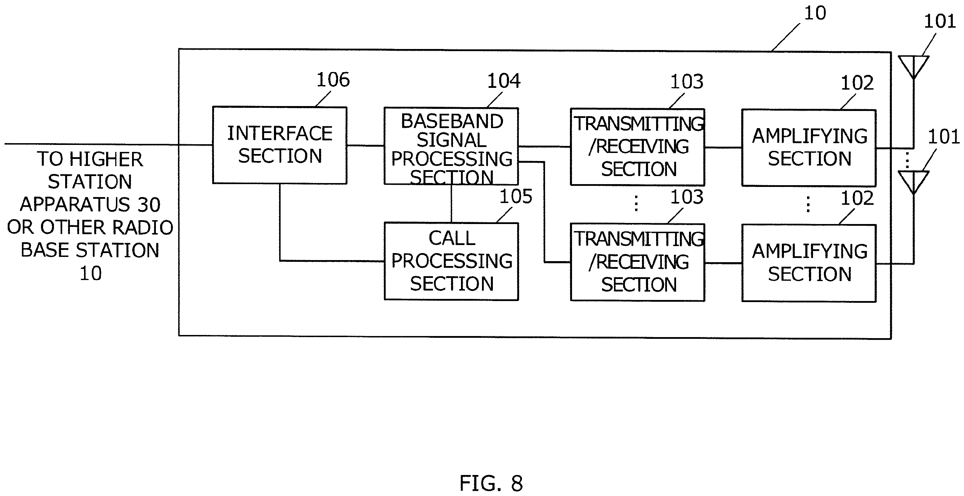

FIG. 8 is a diagram to illustrate an overall structure of a radio base station 10 according to the present embodiment. As illustrated in FIG. 8, the radio base station 10 has a plurality of transmitting/receiving antennas 101 for MIMO (Multiple Input Multiple Output) communication, amplifying sections 102, transmitting/receiving sections (transmitting sections and receiving sections) 103, a baseband signal processing section 104, a call processing section 105 and an interface section 106.

User data to be transmitted from the radio base station 10 to a user terminal 20 on the downlink is input from the higher station apparatus 30, into the baseband signal processing section 104, via the interface section 106.

In the baseband signal processing section 104, the user data is subjected to a PDCP (Packet Data Convergence Protocol) layer process, user data division and coupling, RLC (Radio Link Control) layer transmission processes such as an RLC retransmission control transmission process, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101. For the transmitting/receiving sections 103, transmitters/receivers, transmitting/receiving circuits or transmitting/receiving devices that can be described based on common understanding of the technical field to which the present invention pertains can be used.

As for uplink signals, radio frequency signals that are received in the transmitting/receiving antennas 101 are each amplified in the amplifying sections 102, converted into baseband signals through frequency conversion in each transmitting/receiving section 103, and input into the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the interface section 106. The call processing section 105 performs call processing such as setting up and releasing communication channels, manages the state of the radio base station 10 and manages the radio resources.

The interface section 106 transmits and receives signals to and from neighboring radio base stations (backhaul signaling) via an inter-base station interface (for example, optical fiber, the X2 interface, etc.). Alternatively, the interface section 106 transmits and receives signals to and from the higher station apparatus 30 via a predetermined interface.

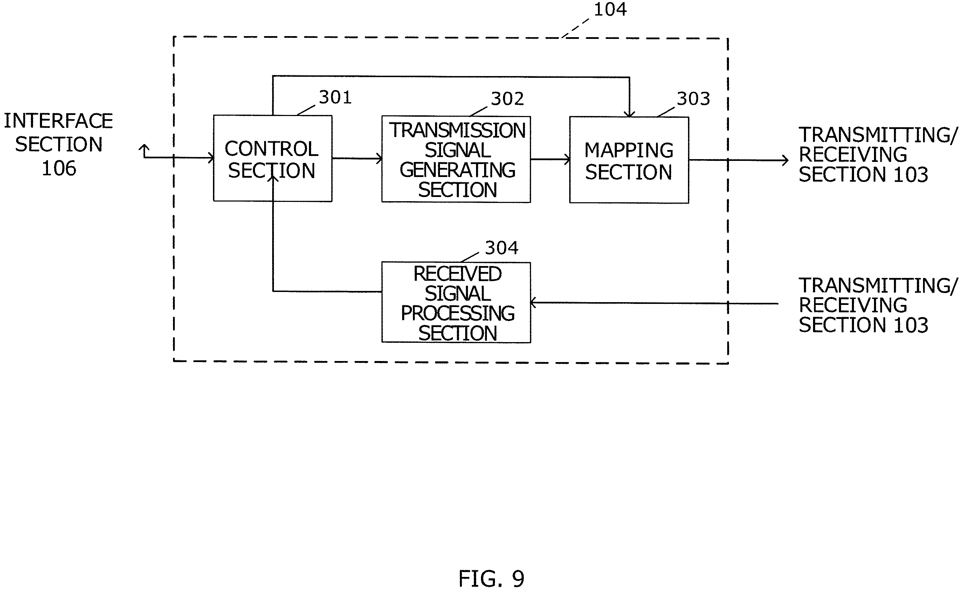

FIG. 9 is a diagram to illustrate a principle functional structure of the baseband signal processing section 104 provided in the radio base station 10 according to the present embodiment. As illustrated in FIG. 9, the baseband signal processing section 104 provided in the radio base station 10 is comprised at least of a control section 301, a transmission signal generating section 302, a mapping section 303 and a received signal processing section 304.

The control section 301 controls the scheduling of downlink user data that is transmitted in the PDSCH, downlink control information that is communicated in one or both of the PDCCH and the enhanced PDCCH (EPDCCH), downlink reference signals and so on. Also, the control section 301 controls the scheduling (allocation control) of RA preambles communicated in the PRACH, uplink data that is communicated in the PUSCH, uplink control information that is communicated in the PUCCH or the PUSCH, and uplink reference signals. Information about the allocation control of uplink signals (uplink control signals, uplink user data, etc.) is reported to the user terminals 20 by using downlink control signals (DCI).

The control section 301 controls the allocation of radio resources to downlink signals and uplink signals based on command information from the higher station apparatus 30, feedback information from each user terminal 20 and so on. That is, the control section 301 functions as a scheduler. For the control section 301, a controller, a control circuit or a control device that can be described based on common understanding of the technical field to which the present invention pertains can be used.

The transmission signal generating section 302 generates downlink signals based on commands from the control section 301 and outputs these signals to the mapping section 303. To be more specific, the downlink control signal generating section 302 generates downlink assignments, which report downlink signal allocation information, and uplink grants, which report uplink signal allocation information, based on commands from the control section 301. Also, the downlink data signals are subjected to a coding process and a modulation process, based on coding rates and modulation schemes that are determined based on channel state information (CSI) from each user terminal 20 and so on. For the transmission signal generating section 302, a signal generator or a signal generating circuit that can be described based on common understanding of the technical field to which the present invention pertains can be used.

The mapping section 303 maps the downlink signals generated in the transmission signal generating section 302 to predetermined radio resources based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs the receiving processes (for example, demapping, demodulation, decoding and so on) of the UL signals that are transmitted from the user terminals (for example, delivery acknowledgement signals (HARQ-ACKs), data signals that are transmitted in the PUSCH, random access preambles that are transmitted in the PRACH, and so on). The processing results are output to the control section 301. By using the received signals, the received signal processing section 304 may measure the received power (for example, the RSRP (Reference Signal Received Power)), the received quality (for example, the RSRQ (Reference Signal Received Quality)), channel states and so on. The measurement results may be output to the control section 301. The received signal processing section 304 can be constituted by a signal processor, a signal processing circuit or a signal processing device, and a measurer, a measurement circuit or a measurement device that can be described based on common understanding of the technical field to which the present invention pertains.

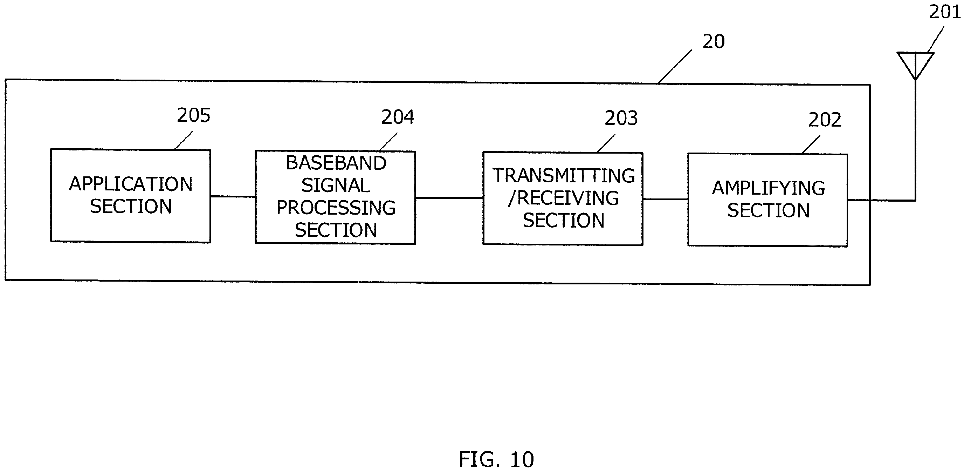

FIG. 10 is a diagram to illustrate an overall structure of a user terminal 20 according to the present embodiment. As illustrated in FIG. 10, the user terminal 20 has a plurality of transmitting/receiving antennas 201 for MIMO communication, amplifying sections 202, transmitting/receiving sections (transmitting sections and receiving sections) 203, a baseband signal processing section 204 and an application section 205.

Radio frequency signals that are received in a plurality of transmitting/receiving antennas 201 are each amplified in the amplifying sections 202 and converted into the baseband signal through frequency conversion in the transmitting/receiving sections 203. This baseband signal is subjected to an FFT process, error correction decoding, a retransmission control receiving process and so on in the baseband signal processing section 204. In this downlink data, downlink user data is forwarded to the application section 205. The application section 205 performs processes related to higher layers above the physical layer and the MAC layer, and so on. Furthermore, in the downlink data, broadcast information is also forwarded to the application section 205. For the transmitting/receiving sections 203, transmitters/receivers, transmitting/receiving circuits or transmitting/receiving devices that can be described based on common understanding of the technical field to which the present invention pertains can be used.

Meanwhile, uplink user data is input from the application section 205 to the baseband signal processing section 204. In the baseband signal processing section 204, a retransmission control (HARQ) transmission process, channel coding, precoding, a discrete Fourier transform (DFT) process, an inverse fast Fourier transform (IFFT) process and so on are performed, and the result is forwarded to transmitting/receiving section 203. The baseband signal that is output from the baseband signal processing section 204 is converted into a radio frequency band in the transmitting/receiving sections 203. After that, the amplifying sections 202 amplify the radio frequency signals having been subjected to frequency conversion, and transmit the resulting signals from the transmitting/receiving antennas 201.

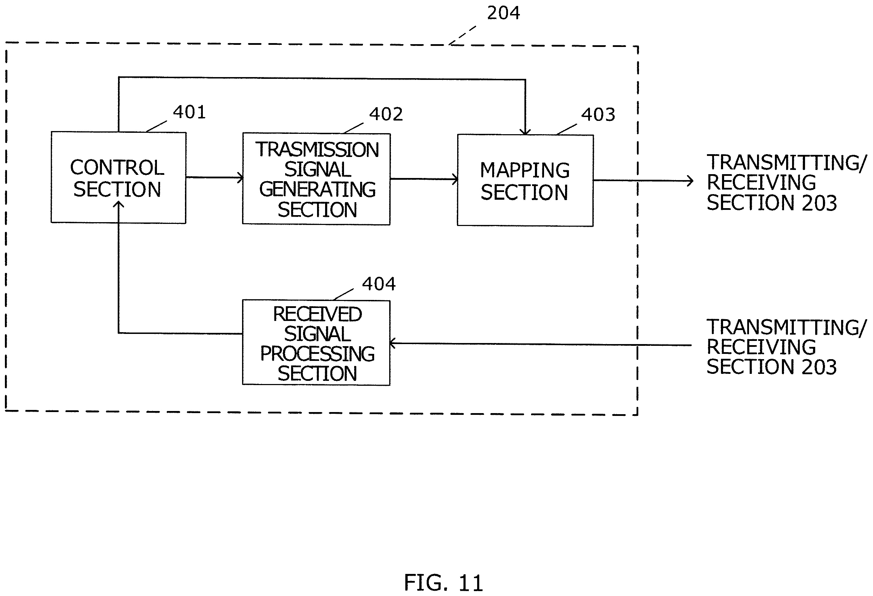

FIG. 11 is a diagram to illustrate a principle functional structure of the baseband signal processing section 204 provided in the user terminal 20. Note that, although FIG. 11 primarily illustrates functional blocks that pertain to characteristic parts of the present embodiment, the user terminal 20 has other functional blocks that are necessary for radio communication as well. As illustrated in FIG. 11, the baseband signal processing section 204 provided in the user terminal 20 is comprised at least of a control section 401, a transmission signal generating section 402, a mapping section 403 and a received signal processing section 404.

For example, the control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not retransmission control is necessary for the downlink data signals, and so on. To be more specific, the control section 401 controls the transmission signal generating section 402 and the mapping section 403.

The control section 401 exerts control so that downlink control channel detection operations are not carried out in unlicensed frequencies during the DMTC period, and discovery reference signal (DRS) receiving operations alone are carried out.

The transmission signal generating section 402 generates uplink signals based on commands from the control section 401, and outputs these signals to the mapping section 403. For example, the transmission signal generating section 402 generates uplink control signals such as delivery acknowledgement signals (HARQ-ACKs) and channel state information (CSI) based on commands from the control section 401. Also, the transmission signal generating section 402 generates uplink data signals based on commands from the control section 401. For example, when an uplink grant is included in a downlink control signal that is reported from the radio base station 10, the control section 401 commands the transmission signal generating section 402 to generate an uplink data signal. For transmission signal generating section 402, a signal generator or a signal generating circuit that can be described based on common understanding of the technical field to which the present invention pertains can be used.

The mapping section 403 maps the uplink signals generated in the transmission signal generating section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs receiving processes (for example, demapping, demodulation, decoding and so on) of DL signals (for example, downlink control signals transmitted from the radio base station, downlink data signals transmitted in the PDSCH, and so on). The received signal processing section 404 outputs the information received from the radio base station 10, to the control section 401. The received signal processing section 404 outputs, for example, broadcast information, system information, paging information, RRC signaling, DCI and so on to the control section 401.

Also, the received signal processing section 404 may measure the received power (RSRP), the received quality (RSRQ) and channel states, by using the received signals. The measurement results may be output to the control section 401.

The received signal processing section 404 can be constituted by a signal processor, a signal processing circuit or a signal processing device, and a measurer, a measurement circuit or a measurement device that can be described based on common understanding of the technical field to which the present invention pertains.

Note that the block diagrams that have been used to describe the above embodiment illustrate blocks in function units. These functional blocks (components) may be implemented in arbitrary combinations of hardware and software. The means for implementing each functional block is not particularly limited. That is, each functional block may be implemented with one physically-integrated device, or may be implemented by connecting two physically-separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. The radio base stations 10 and user terminals 20 may be implemented with a computer device that includes a processor (CPU), a communication interface for connecting with networks, a memory and a computer-readable storage medium that stores programs. That is, the radio base stations and user terminals according to an embodiment of the present invention may function as computers that execute the processes of the radio communication method of the present invention.

The processor and the memory are connected with a bus for communicating information. The computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. The radio base stations 10 and user terminals 20 may include input devices such as input keys and output devices such as displays.

The functional structures of the radio base stations 10 and user terminals 20 may be implemented by using the above-described hardware, may be implemented by using software modules to be executed on the processor, or may be implemented by combining both of these. The processor controls the whole of the user terminals by running an operating system. The processor reads programs, software modules and data from the storage medium into the memory, and executes various types of processes. These programs have only to be programs that make a computer execute each operation that has been described with the above embodiments. For example, the control section 401 of the user terminals 20 may be stored in a memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, radio resources may be specified by indices. "Channels" and "symbols" may be replaced by "signals" (or "signaling"). "Signals" may be "messages." "Component carriers" (CCs) may be referred to as "carrier frequencies," "cells" and so on.

The examples/embodiments illustrated in this description may be used individually or in combinations, and the mode of may be switched depending on the implementation. A report of predetermined information (for example, a report to the effect that "X holds") does not necessarily have to be sent explicitly, and can be sent implicitly.

Reporting of information is by no means limited to the examples/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIBs (Master Information Blocks) and SIBs (System Information Blocks)) ), other signals or combinations of these. RRC signaling may include, for example, an RRC connection setup message, RRC connection reconfiguration message, and so on.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples or embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the example s/embodiments herein may be re-ordered as long as inconsistencies do not arise.

Note that the present invention is by no means limited to the above embodiments and can be carried out with various changes. The sizes and shapes illustrated in the accompanying drawings in relationship to the above embodiment are by no means limiting, and may be changed as appropriate within the scope of optimizing the effects of the present invention. Besides, implementations with various appropriate changes may be possible without departing from the scope of the object of the present invention.

The disclosure of Japanese Patent Application No. 2015-099335, filed on May 14, 2015, including the specification, drawings and abstract, is incorporated herein by reference in its entirety.

## Claims

1. A user terminal comprising:
a control section that controls transmission and receipt of signals in a first frequency carrier where LBT (Listen Before Talk) is configured; and
a transmitting/receiving section,
wherein the control section exerts control so that, in a DMTC (Discovery Measurement Timing Configuration) period, a downlink control channel detection operation is not performed in the first frequency carrier, and only an operation for receiving a discovery reference signal for RRM (Radio Resource Management) measurement is performed.

2. The user terminal according to claim 1, wherein the control section controls the discovery reference signal receiving operation assuming that there are plurality of timings to transmit the discovery reference signal in the DMTC period.

3. The user terminal according to claim 1, wherein the control section controls the discovery reference signal receiving operation assuming that a plurality of discovery reference signals are transmitted simultaneously in the DMTC period.

4. The user terminal according to claim 1, wherein:
the transmitting/receiving section receives a list of physical cell IDs of candidate connecting cells in the first frequency carrier from a radio base station; and
the control section exerts control so that cell detection is attempted with respect to all the physical cell IDs in the list at a timing of a synchronization signal included in the discovery reference signal.

5. The user terminal according to claim 1, wherein the control section exerts control so that, at a timing of a synchronization signal that is included in the discovery reference signal, cell detection is attempted with respect to a cell other than a cell that corresponds to a physical cell ID of the synchronization signal.

6. The user terminal according to claim 4 or claim 5, wherein the control section exerts control so that, when a report about a detected cell is sent to the radio base station, a timing in the DMTC period where the cell is detected is reported together.

7. The user terminal according to claim 1, wherein the control section exerts control so that blind detection for signals in a serving cell of the first frequency carrier is carried out outside the DMTC period.

8. The user terminal according to claim 1, wherein the control section exerts control so that an operation for demodulating a physical broadcast channel from a serving cell of the first frequency carrier is not performed outside the DMTC period.

9. The user terminal according to claim 1, wherein the control section exerts control so that, when a downlink signal of the first frequency carrier is transmitted at a specific subframe timing outside the DMTC period, the receiving operation is carried out assuming that the discovery reference signal is multiplexed on the downlink signal.

10. A radio communication method for a user terminal that can communicate with a radio base station by using a first frequency carrier where LBT (Listen Before Talk) is configured, the radio communication method comprising the step of exerting control so that, in a DMTC (Discovery Measurement Timing Configuration) period, a downlink control channel detection operation is not performed in the first frequency carrier, and only an operation for receiving a discovery reference signal for RRM (Radio Resource Management) measurement is performed.
